# EUROPEAN PATENT SPECIFICATION

(11) **EP 4 011 015 B1**
(45) Date of publication and mention of the grant of the patent: **27.08.2025**
(21) Application number: 19940934.3
(22) Date of filing: 07.08.2019
(51) Int. Cl.: H04L 1/1822, H04L 1/1812, H04L 1/1867

(54) **SHARING HARQ PROCESSES BY MULTIPLE CONFIGURED GRANTS RESOURCES**
VERFAHREN ZUR GEMEINSAMEN NUTZUNG VON HARQ-PROZESSEN DURCH MEHRERE KONFIGURIERTE BERECHTIGUNGSRESSOURCEN
PARTAGE DE PROCESSUS HARQ PAR DE MULTIPLES RESSOURCES À OCTROI CONFIGURÉES

(43) Date of publication of application: 15.06.2022
(73) Proprietor: Nokia Technologies Oy, 02610 Espoo (FI)
(72) Inventor: WU, Chunli, Beijing 100102 (CN); TURTINEN, Samuli, 91100 Ii (FI); SEBIRE, Benoist, Tokyo 106-6141 (JP); ROSA, Claudio, 8920 Randers (DK); KUO, Ping-Heng, Bristol BS1 5SW (GB)
(74) Representative: Cohausz & Florack
(86) International application number: PCT/CN2019/099690
(87) International publication number: WO 2021/022532

(56) References cited:
- WO-A1-2019/144919
- CN-A- 109 863 708
- US-A1- 2017 346 602
- LG ELECTRONICS: "Enhanced UL configured grant transmission for NR URLLC", vol. RAN WG1, no. Reno, USA; 20190513 - 20190517, 13 May 2019 (2019-05-13), XP051728120, Retrieved from the Internet <URL:http://www.3gpp.org/ftp/Meetings%5F3GPP%5FSYNC/RAN1/Docs/R1%2D1906669%2Ezip> [retrieved on 20190513]
- LG ELECTRONICS INC: "HARQ process ID selection for NR-U", vol. RAN WG2, no. Spokane, USA; 20181112 - 20181116, 2 November 2018 (2018-11-02), XP051482097, Retrieved from the Internet <URL:http://www.3gpp.org/ftp/tsg%5Fran/WG2%5FRL2/TSGR2%5F104/Docs/R2%2D1818223%2Ezip> [retrieved on 20181102]
- HUAWEI ET AL: "Discussion on NR support for multiple active uplink configured grants", vol. RAN WG2, no. Athens, Greece; 20190225 - 20190301, 15 February 2019 (2019-02-15), XP051603401, Retrieved from the Internet <URL:http://www.3gpp.org/ftp/tsg%5Fran/WG2%5FRL2/TSGR2%5F105/Docs/R2%2D1902055%2Ezip> [retrieved on 20190215]
- ERICSSON: "Report of Email Discussion [105#51][NR-U] Configured Grants (Ericsson)", vol. RAN WG2, no. Xi'an, China; 20190408 - 20190412, 6 April 2019 (2019-04-06), XP051702021, Retrieved from the Internet <URL:http://www.3gpp.org/ftp/Meetings%5F3GPP%5FSYNC/RAN2/Docs/R2%2D1904742%2Ezip> [retrieved on 20190406]
- INTERDIGITAL: "Configured grant transmission in NR-U", vol. RAN WG2, no. Reno, USA; 20190513 - 20190517, 3 May 2019 (2019-05-03), XP051710719, Retrieved from the Internet <URL:http://www.3gpp.org/ftp/tsg%5Fran/WG2%5FRL2/TSGR2%5F106/Docs/R2%2D1906404%2Ezip> [retrieved on 20190503]
- ZTE: "Considerations on configured grant for NR-U", 3GPP DRAFT; R2-1811279 CONSIDERATIONS ON CONFIGURED GRANT FOR NR-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Gothenburg, Sweden; 20180820 - 20180824, 8 August 2018 (2018-08-08), Mobile Competence Centre ; 650, route des Lucioles ; F-06921 Sophia-Antipolis Cedex ; France, XP051520943
- OPPO: "Enhancements of configured grant in NR-U", 3GPP DRAFT; R2-1813588 - CONFIGURED UPLINK TRANSMISSION FOR NR-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Chengdu, China; 20181008 - 20181012, 27 September 2018 (2018-09-27), Mobile Competence Centre ; 650, route des Lucioles ; F-06921 Sophia-Antipolis Cedex ; France, XP051523089
- LG ELECTRONICS INC.: "HARQ process ID selection for NR-U", 3GPP DRAFT; R2-1818223 HARQ PROCESS ID SELECTION FOR NR-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Spokane, USA; 20181112 - 20181116, 2 November 2018 (2018-11-02), Mobile Competence Centre ; 650, route des Lucioles ; F-06921 Sophia-Antipolis Cedex ; France, XP051482097
- NOKIA, NOKIA SHANGHAI BELL: "Configured grant operation for NR-U", 3GPP DRAFT; R2-1906757 CONFIGURED GRANT OPERATION FOR NR-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, 13 May 2019 (2019-05-13), Mobile Competence Centre ; 650, route des Lucioles ; F-06921 Sophia-Antipolis Cedex ; France, XP051730213

## Description

### FIELD

Embodiments of the present disclosure generally relate to the field of communications and in particular, to a method, device, apparatus and computer readable storage medium for sharing Hybrid Automatically Repeat Request (HARQ) processes by multiple configured grant resources.

### BACKGROUND

With developments of communication systems, new technologies have been proposed. For example, to reduce the waste of periodically allocated resources, the communication system enables multiple devices to share the periodic resources, called a configured grant. The base station allocates the configured grant resources to multiple terminal devices, and the terminal devices randomly utilize the resources when they have data to transmit. By assigning the configured grant resources, the communication system eliminates the packet transmission delay for a scheduling request procedure and increases the utilization ratio of allocated periodic radio resources.

3GPP Draft R1-1906669 is concerned with enhanced uplink configured grant transmission for New Radio Ultra-Reliable and Low Latency Communication, and proposes ways in which an available symbol for configured grant can be determined.

INTERDIGITAL: "Configured grant transmission in NR-U", 3GPP DRAFT; R2-1906404 is concerned with multiple active CGs that may be configured with a BWP. It also suggests to introduce a new timer (CG retransmission timer) for controlling retransmission and storing the TB in the HARQ process ID buffer.

### SUMMARY

Generally, embodiments of the present disclosure relate to a method for sharing HARQ processed by multiple configured grant resources and the corresponding communication devices. The invention provides a terminal device according to the appended independent claim 10, a network device according to the appended independent claim 16, corresponding methods according to the appended independent claims 1 and 6 and computer readable medium according to the appended independent claims 19 and 20.

Optional, but advantageous features are disclosed in the appended dependent claims.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
Fig. 1 illustrates a schematic diagram of a communication system according to embodiments of the present disclosure;
Fig. 2 illustrates a schematic diagram of interactions among devices according to embodiments of the present disclosure;
Fig. 3 illustrates a flow chart of a method implemented at a terminal device according to embodiments of the present disclosure;
Fig. 4 illustrates a flow chart of a method implemented at a network device according to embodiments of the present disclosure;
Fig. 5 illustrates a flow chart of a method implemented at a terminal device according to embodiments of the present disclosure;
Fig. 6 illustrates a flow chart of a method implemented at a terminal device according to embodiments of the present disclosure;
Fig. 7 illustrates a flow chart of a method implemented at a network device according to embodiments of the present disclosure;
Fig. 8 illustrates a schematic diagram of interactions among devices according to embodiments of the present disclosure;
Fig. 9 illustrates a schematic diagram of a device according to embodiments of the present disclosure; and

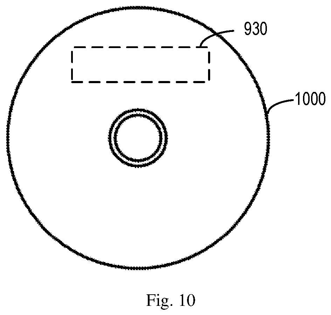

Fig. 10 shows a block diagram of an example computer readable medium in accordance with some embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT), New Radio (NR) and so on. Furthermore, the communications between a user equipment and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a user equipment accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

As mentioned above, the technology "configured grant" has be proposed. In New Radio (NR) Release-15 (Rel-15), only one configured grant (CG) can be configured per bandwidth part (BWP). Certain number of HARQ processes among the 16 HARQ processes is configured to be used for the CG via RRC signalling and the terminal device determines which HARQ process to be used for a certain CG occasion based on the slot/symbol number for both Type 1 CG (the periodicity, the physical resource blocks (PRBs) and the modulation and coding scheme (MCS) are all configured via radio resource control (RRC) signalling) and Type 2 CG (the periodicity is configured via RRC and the PRBs/MCS is allocated with physical downlink control channel (PDCCH) activation/deactivation). The HARQ entity is per cell/carrier, hence when the terminal device is switched to another BWP of the same cell/carrier, HARQ retransmissions can continue there. Table 1 below shows the contents in the specification of the third generation partner project (3GPP) 38.331 and 38.321.

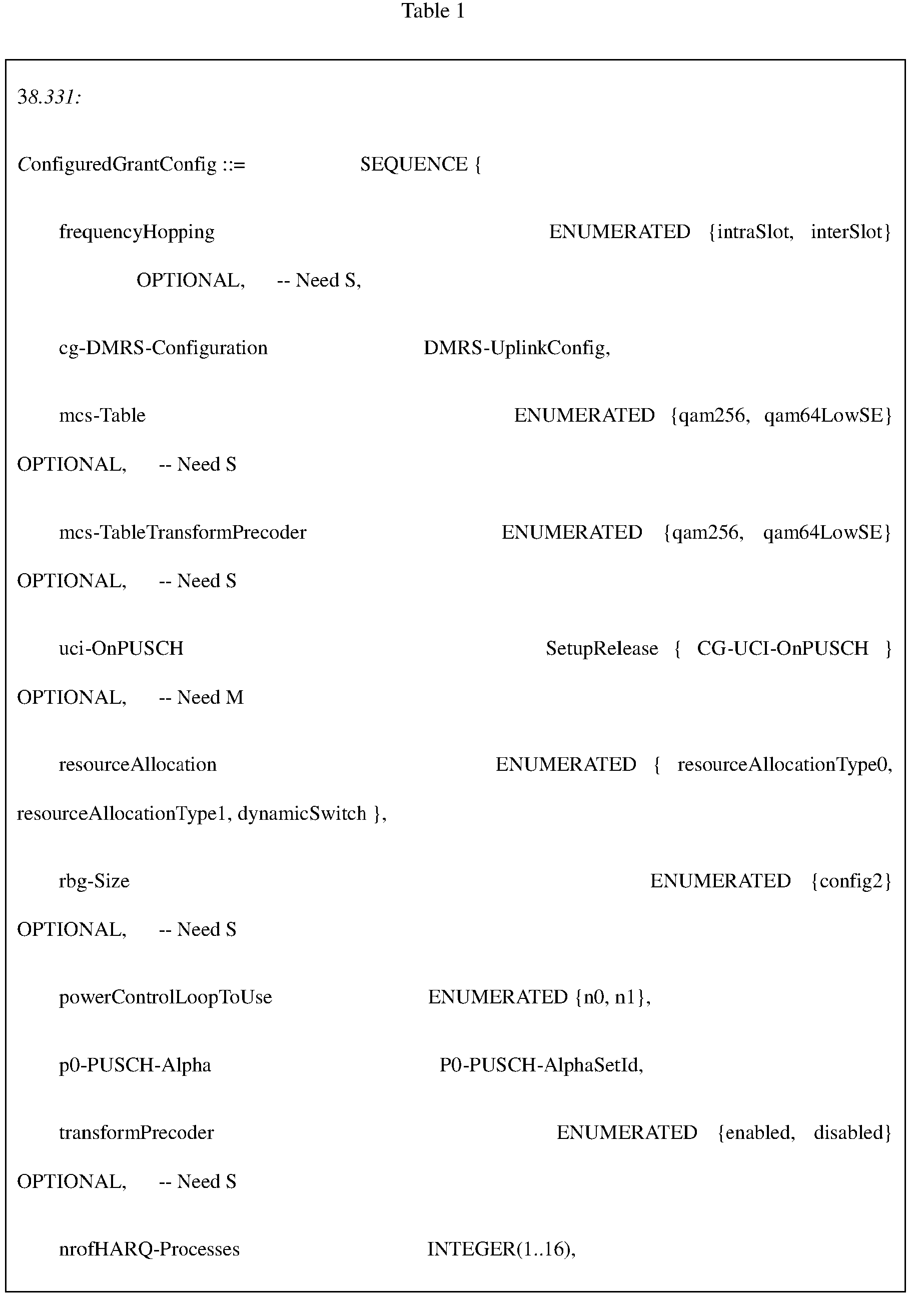

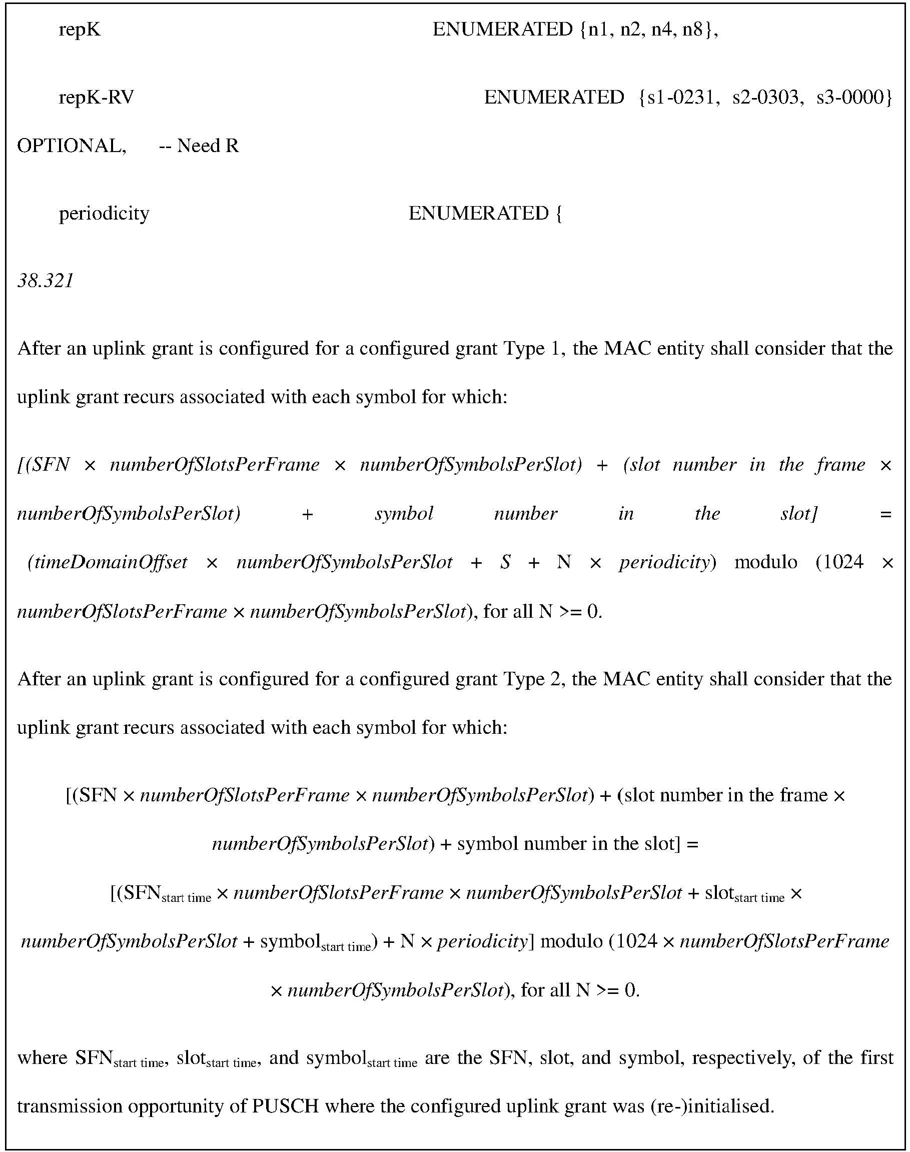

Multiple configured grants (CG) per BWP has been discussed. For example, it was agreed to have different HARQ processes for those multiple configured grants: when multiple uplink CG or downlink Semi-Persistent Scheduling (SPS) configurations are configured, an offset for each configuration is needed for the calculation of the HARQ process identity.

However, HARQ operation for NR-unlicensed (NR-U) systems is a bit different from legacy operation since the HARQ process identity to be used for a CG occasion is not determined based on the timing. It is left to the terminal device to select the HARQ process to be used for a configured grant. The terminal device will then indicate the HARQ process in uplink control information (UCI).

Multiple CGs per BWP for NR-U is likely to be configured on different listen-before-talk (LBT) sub-channels to increase transmission possibilities. Since the LBT success rate can dynamically change depending on the logical channel occupancy status, semi-statically configuring a certain number of HARQ process per CG may cause inefficient utilization of the HARQ processes when the sub-channel for a CG is overloaded and HARQ process shortage which cause CG resource waste since no transport block can be transmitted when all the HARQ processes are waiting for retransmissions when the retransmission timer is running. Thus, new mechanism is needed to sharing multiple HARQ processes by multiple configured grant resources.

According to embodiments of the present disclosure, multiple configured grant resources share a common pool of HARQ processes. The network device transmits information concerning the multiple configured grants resources and the common pool HARQ process to the terminal device. Further, for one of the multiple configured grant resources, the terminal device selects a HARQ process from the common pool of HARQ processes. In this way, the throughput has improved and the low latency for high priority data is ensured.

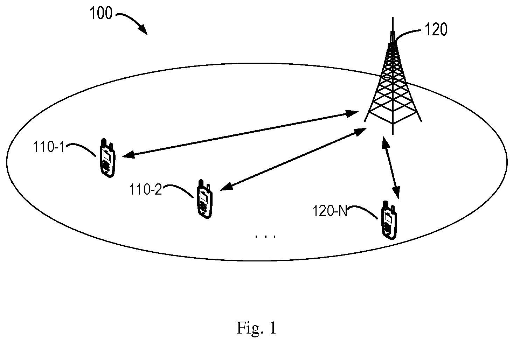

Fig. 1 illustrates a schematic diagram of a communication system 100 in which embodiments of the present disclosure can be implemented. The communication system 100 comprises the first devices 110 and the second device 120. For the purpose of illustrations, the first devices 110 may be referred to as the terminal device 110 and the second device 120 may be referred to as the network device 120 hereinafter. It should be noted that the first devices and the second devices are interchangeable. For example, the procedures which are described to be implemented at the terminal device may also be able to be implemented at the network device and the procedures which are described to be implemented at the network device may also be able to be implemented at the terminal device.

The link from the second device 120 to the first devices 110 may be referred to as the "downlink" and the link from the first devices 110 to the second device 120 may be referred to as the "uplink".

The communication system 100, which is a part of a communication network, comprises terminal devices 110-1, 110-2, ... , 110-N (collectively referred to as "terminal device(s) 110" where N is an integer number). The communication system 100 comprises one or more network devices, for example, a network device 120. It should be understood that the communication system 100 may also comprise other elements which are omitted for the purpose of clarity. It is to be understood that the numbers of terminal devices and network devices shown in Fig. 1 are given for the purpose of illustration without suggesting any limitations. The terminal devices 110 and the network device 120 may communicate with each other.

It is to be understood that the number of network devices and terminal devices is only for the purpose of illustration without suggesting any limitations. The system 100 may include any suitable number of network devices and terminal devices adapted for implementing embodiments of the present disclosure.

Communications in the communication system 100 may be implemented according to any proper communication protocol(s), comprising, but not limited to, cellular communication protocols of the first generation (1G), the second generation (2G), the third generation (3G), the fourth generation (4G) and the fifth generation (5G) and on the like, wireless local network communication protocols such as Institute for Electrical and Electronics Engineers (IEEE) 902.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

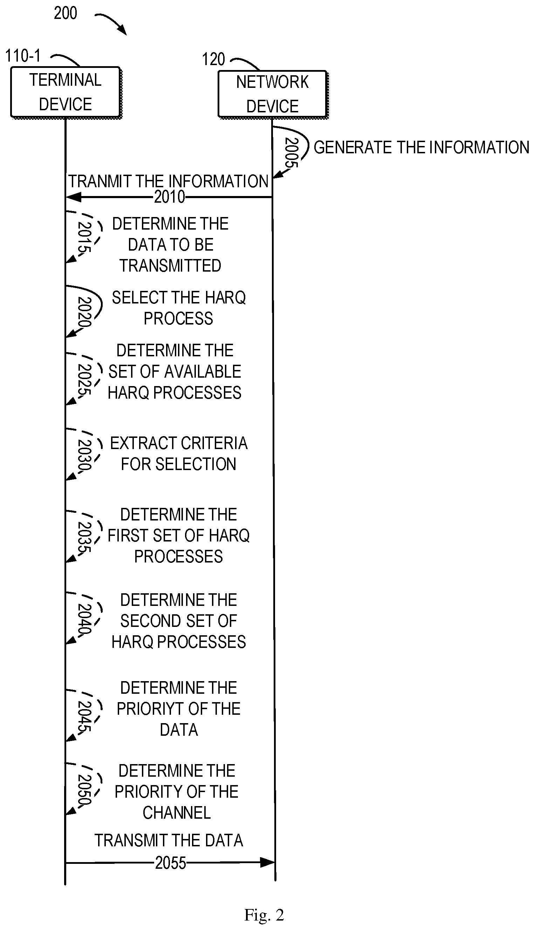

Fig. 2 illustrates a schematic diagram of interactions 200 in accordance with embodiments of the present disclosure. The interactions 200 may be implemented at any suitable devices. Only for the purpose of illustrations, the interactions 200 are described to be implemented at the terminal device 110-1 and the network device 120.

The network device 120 generates 2005 the information. The information indicates a plurality of configured grant resources and a plurality of HARQ processes. The plurality of configured grant resources shares the plurality of HARQ processes. The information may comprise identities of the plurality of configured grant resources and identities of the plurality of HARQ processes. In this way, sharing the plurality of HARQ processes increases throughput to allow a configured grant to use more processes than fixed a number for each. When there is no data for transmission for a configured grant, it does not consume any process.

The configured grant resource may be periodic resources shared by terminal devices. The term "configured grant (CG)" refer to grant-free resource in uplink, which means that the pre-configured UE-specific resources will be used for UE UL transmission without dynamic scheduling/grant. HARQ can be used in stop-and-wait mode or in selective repeat mode. Stop-and-wait is simpler, but waiting for the receiver's acknowledgment reduces efficiency. Thus multiple stop-and-wait HARQ processes are often done in parallel in practice: when one HARQ process is waiting for an acknowledgment, another process can use the logical channel to send some more data. The logical channel is defined by the type of information it carries.

In some embodiments, the network device 120 may determine the configured grant resources and allocate them to the terminal device 110-1. The network device 120 may also determine the plurality of HARQ processes based on one or more conditions. For example, the conditions may comprise one or more of: quality of service, traffic volume, and a service type.

In some embodiments, the information may comprise one or more rules for determining the priority of data to be transmitted. Details of the rules will be given later.

The network device 120 transmits 2010 the information to the terminal device 110-1. In some embodiments, the terminal device 110-1 may determine 2015 that data needs to be transmitted on one of the plurality of configured grant resources. For example, the terminal device 110-1 may determine that a type of service needs to be transmitted on the configured grant resource. The data may belong to a logical channel which uses the configured grant resource. The data may arrive in the buffer of the terminal device 110-1.

The terminal device 110-1 selects 2020 the HARQ process from the plurality of HARQ processes. The terminal device 110-1 may determine 2025 available HARQ processes in the plurality of HARQ processes. For example, when selecting a HARQ process for the configured grant resource, the terminal device 110-1 may determine whether a HARQ process from the common pool is available for new transmission/retransmission based on the timer of the HARQ process. For example, the timer may be a ConfiguredGrantTimer and CG retransmission timer status of the corresponding HARQ process. In some embodiments, the multiple configured grant resources may be considered as one configured grant, hence retransmissions may be done on different configured grant resources from the initial transmission if the resources give the same transmission block size..

ConfiguredGrantTimer and CG retransmission timers are maintained per HARQ process to determine whether a HARQ process is available for new transmission/retransmission. When the CG retransmission timer is running, the terminal device 110-1 may wait for potential HARQ feedback or uplink grant, thus it cannot use the HARQ process for either autonomous retransmission on CG resources or new transmission. While when the ConfiguredGrantTimer is running, the terminal device 110-1 may wait for dynamic uplink grant and cannot use the HARQ process for new transmissions. The ConfiguredGrantTimer may be configured longer than the CG retransmission timer since the terminal device 110-1 should be allowed to attempt at least one retransmission on configured grant resources before the corresponding transmission block is dropped and ACK is assumed at the terminal device 110-1.

In some embodiments, the information may explicitly indicate which of the HARQ processes can be used by one or more of the configured grant resources. Alternatively or in addition, the information may explicitly indicate which of the HARQ processes can be used by the logical channel/channel group with priority higher than a threshold priority and/or which of the HARQ processes can be used by the logical channel/channel group with priority lower than the threshold priority.

In one embodiment, the terminal device 110-1 may determine the number of the available HARQ processes. In the situation that the number is below a threshold number, the terminal device 110-1 may determine a priority of the data to be transmitted. If the priority of the data exceeds a threshold priority, the terminal device 110-1 may select the HARQ process from the plurality of HARQ processes. The threshold number may be obtained from the information. Alternatively, the threshold number may be pre-determined. In this way, it ensures that the data with high priority can be transmitted. In some embodiments, the terminal device 110-1 may check the number of HARQ processes being used to transmit low priority data, i.e. data belonging to logical channels/channel groups with priority below a second threshold priority. In this situation if the number HARQ processes being used to transmit low priority data being below a threshold number, the transmission of data with low priority is allowed. The term "low priority data" or "data with low priority" refers to the data belongs to logical channels/logical channel groups with priority lower than a threshold priority. The term "high priority data" or "data with high priority" refers to the data belongs to logical channels/logical channel groups with priority exceeding a threshold priority.

In some embodiments, the terminal device 110-1 may extract 2030 criteria for the selection of the HARQ process from the information. For example, in order to increase the chances of having free HARQ processes for transmitting high priority data on the configured grant resource, the criteria may indicate that a subset of HARQ processes within the plurality of HARQ processes for CG can only be used for the transmission of high priority data. Low priority transmissions may be limited to the HARQ processes within the plurality of HARQ processes for CG and outside that subset.

The terminal device 110-1 may determine 2035 a first set of HARQ processes based on the information. The first set of HARQ processes may be used for the data with priorities higher than a threshold priority. Alternatively or in addition, the terminal device 110-1 may determine 2040 a second set of HARQ processes based on the information. The data with priorities lower than a threshold priority can only use the second set of HARQ processes. In other words, transmissions on configured grant resources of data belonging to logical channels with priorities lower than a threshold priority can only use the second set of HARQ processes.

In some embodiments, the terminal device 110-1 may determine 2045 the priority of the data. The terminal device 110-1 may determine a type of service to which the data belongs and determine the priority based on the type of service. In other embodiments, the terminal device 110-1 may determine 2050 the priority of the logical channel to which the data belongs . The terminal device 110-1 may determine the priority of the data based on other rules. For example, the terminal device 110-1 may determine whether the data contain any MAC control element (CE) related to high priority traffic (for example, buffer status report of high priority logical channels). If the data contains the MAC CE related to high priority traffic, the data may be determined to have high priority. Alternatively, the terminal device 110-1 may determine the priority of the data based on the buffered time of the data. For example, the terminal device 110-1 may determine how long the data has been waiting in the buffer and the priority of the data may increase if the buffered time exceeds threshold time.

In other embodiments, the data of the priority may be determined based on the remaining time to delivery deadline. For example, the terminal device 110-1 may determine how much time left to the delivery deadline of the data. The priority may increase if the remaining time is shorter than a threshold.

In other embodiments, the data of the priority may be determined based on Packet Data Convergence Protocol (PDCP) duplication. If the data is a duplicate, the terminal device 110-1 may determine how its progress is comparing to the counterpart leg. The priority may increase when it is lagging its counterpart leg to a certain extent. It should be noted that the priority of the data can be determined based on any suitable rules. The rules may be pre-configured. Alternatively or in addition, as mentioned above, the rules may be determined by the network device 120 and be transmitted in the information.

In this situation, the terminal device 110-1 may compare the priority of the data on the one of the plurality of configured grant resources with the threshold priority. The threshold priority may be obtained from the information. Alternatively, the threshold priority may be pre-determined. If the priority of the data exceeds the threshold priority, the terminal device 110-1 may select the HARQ process from the first set of HARQ processes. In other embodiments, if the priority of the logical channel to which the data belongs exceeds the threshold priority, the terminal device 110-1 may select the HARQ process from the first set of HARQ processes.

Alternatively, if the priority of the data is below the threshold priority, the terminal device 110-1 may select the HARQ process from the second set of HARQ processes. In other embodiments, if the priority of the logical channel to which the data belongs is below the threshold priority, the terminal device 110-1 may select the HARQ process from the second set of HARQ processes. In some embodiments, the second set may be a subset of the first set of HARQ processes. In some embodiments, the information may indicate a third set of HARQ processes being used for the one of the plurality of configured grant resources. If the data is to transmit using the one of the plurality of configured grant resources, the terminal device 110-1 may select the HARQ processes from the third set of HARQ processes.

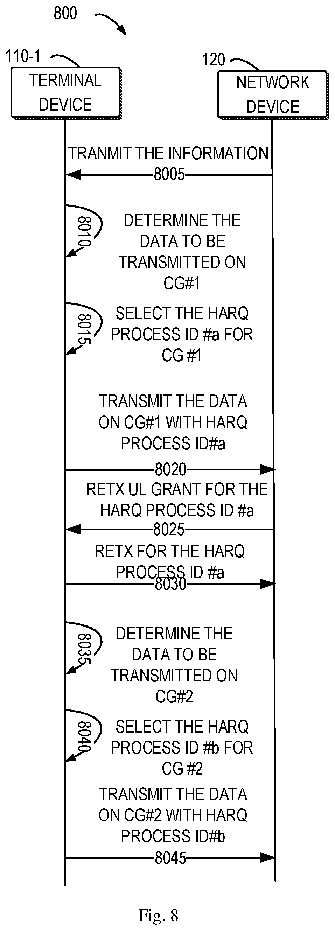

In an example embodiment, the terminal device 110-1 may select the HARQ process based on the configured grant resources. For example, the information may indicate that one or more HARQ processes can be used for a certain configured grant resource. Details of the example embodiment are described in details with the reference to Fig. 8.

The terminal device 110-1 transmits 2055 the data to the network device 120 on the one of the plurality of configured grant resources. In this way, the data with high priority can be transmitted with low latency.

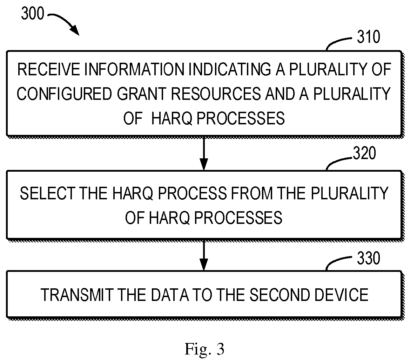

Fig. 3 illustrates a flow chart of a method 300 in accordance with embodiments of the present disclosure. The method 300 may be implemented at any suitable devices. Only for the purpose of illustrations, the method 300 is described to be implemented at the terminal device 110-1. It should be noted that the method 400 may also be implemented at the network device 120.

At block 310, the terminal device 110-1 receives information from the network device 120. The information indicates the plurality of configured grant resources and the plurality of HARQ processes. The plurality of HARQ processes are shared by the plurality of configured grant resources. The information may comprise identities of the plurality of configured grant resources and identities of the plurality of HARQ processes. In this way, sharing the plurality of HARQ processes increases throughput to allow a configured grant to use more processes than fixed a number for each. When there is no data for transmission for a configured grant, it does not consume any process.

Only as an example, there may be two configured grant resources (for example, CG#1 and CG#2) configured for a bandwidth part of a serving cell. They may share 10 HARQ processes. It should be noted that the numbers of the configured grant resources and the HARQ processes are only examples, not limitations.

When the sub-channel corresponding to CG#1 is overloaded, the terminal device 110-1 is not able to transmit many transport blocks thus it will not consume too many HARQ processes. While if the sub-channel corresponding to CG#1 is not overloaded, the terminal device 110-1 can continuously use the CG resources transmitting new transport blocks on different HARQ processes while waiting for HARQ feedback for other transport blocks of other HARQ processes, thus the terminal device 110-1 can use more HARQ processes from the common pool.

At block 320, the terminal device 110-1 selects a HARQ process from the plurality of HARQ processes if it determines that data needs to be transmitted on one of the plurality of configured grant resources. For example, the terminal device 110-1 may determine that a type of service needs to be transmitted on the configured grant resource. The data may be transmitted on a logical channel which uses the configured grant resource.

The terminal device 110-1 may determine available HARQ processes in the plurality of HARQ processes. For example, when selecting a HARQ process for the configured grant resource, the terminal device 110-1 may determine whether a HARQ process from the common pool is available for new transmission/retransmission based on the timer of the HARQ process.

In some embodiments, the information may explicitly indicate which of the HARQ processes can be used by the set of configured grant resources. Alternatively or in addition, the information may explicitly indicate which of the HARQ processes can be used by the logical channel/channel group with high priority and/or which of the HARQ processes can be used by the channel/channel group with low priority.

In one embodiment, the terminal device 110-1 may determine the number of the available HARQ processes. In the situation that the number is below a threshold number, the terminal device 110-1 may determine a priority of the data on the one of the plurality of the configured grant resources. If the priority exceeds a threshold priority, the terminal device 110-1 may select the HARQ process from the plurality of HARQ processes. The threshold number may be obtained from the information. Alternatively, the threshold number may be pre-determined. In this way, it ensures that the data with high priority can be transmitted.

In some embodiments, the terminal device 110-1 may extract criteria for the selection of the HARQ process from the information. For example, in order to increase the chances of having free HARQ processes for transmitting high priority services on the configured grant resource, the criteria may indicate that a subset of HARQ processes within the plurality of HARQ processes for CG can only be used for the transmission of high priority. Low priority transmissions may be limited to the HARQ processes outside that subset.

The terminal device 110-1 may determine a first set of HARQ processes based on the information. The first set of HARQ processes may be used for the configured grant resources with priorities higher than a threshold priority. Alternatively or in addition, the terminal device 110-1 may determine a second set of HARQ processes based on the information. Data with priorities lower than a threshold priority is only allowed to use the second set of HARQ processes. The second set of HARQ processes may be a subset of the first sef of HARQ processes.

In some embodiments, the terminal device 110-1 may determine the priority of data on the one of the plurality of configured grant resources based on the information. Alternatively or in addition, the terminal device 110-1 may determine a type of service to which the data belongs and determine the priority based on the type of service. In other embodiments, the terminal device 110-1 may determine the priority of the logical channel to which the data belong to. The logical channel is defined by the type of information it carries.

In this situation, the terminal device 110-1 may compare the priority of the data with the threshold priority. The threshold priority may be obtained from the information. Alternatively, the threshold priority may be pre-determined. If the priority of the data exceeds the threshold priority, the terminal device 110-1 may select the HARQ process from the first set of HARQ processes. In other embodiments, if the priority of the logical channel to which the data belong to exceeds the threshold priority, the terminal device 110-1 may select the HARQ process from the first set of HARQ processes.

Alternatively, if the priority of the data is below the threshold priority, the terminal device 110-1 may select the HARQ process from the second set of HARQ processes. In other embodiments, if the priority of the logical channel to which the data belong is below the threshold priority, the terminal device 110-1 may select the HARQ process from the second set of HARQ processes.

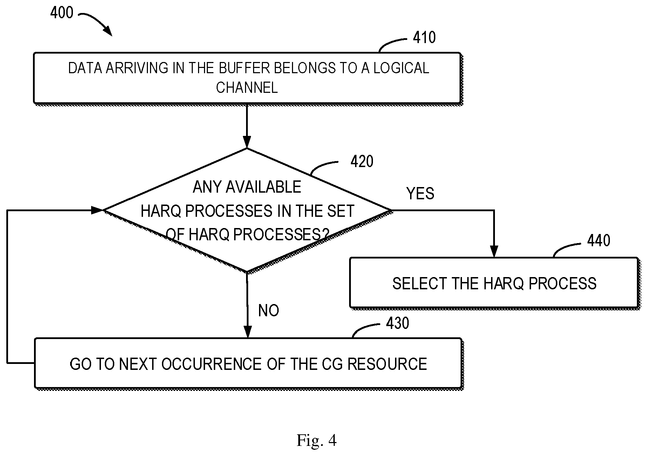

Fig. 4 illustrates a flow chart of the method 400 for selecting the HARQ process according to an embodiment of the present disclosure. In this example, the CG#1 may be used for the transmission of a high priority service (for example, the logical channel #1) and CG#2 may be used for the transmission of a low priority service (for example, the logical channel #2). The pool of N HARQ processes can be configured to ensure that CG#2 can use at most X HARQ processes, which means that N-X HARQ processes in the pool are served for the CG#1. It should be noted that the numbers N and X can be any suitable integer numbers.

At block 410, the terminal device 110-1 determines that the data needs to be transmitted on the CG#2 (channel #2). The data may arrive in the buffer of the terminal device 110-1. The data belongs to a logical channel which has a priority.

At block 420, the terminal device 110-1 determines whether there are available HARQ processes for the CG#2. In this example, the CG#2 is only allowed to select from the second set of HARQ processes. For example, if there are no available HARQ processes, the terminal device 110-1 may go to next occurrence of the CG#2 at block 430.

If there is an available HARQ process in the X HARQ processes, at block 440, the terminal device 110-1 selects the HARQ process from the available HARQ processes.

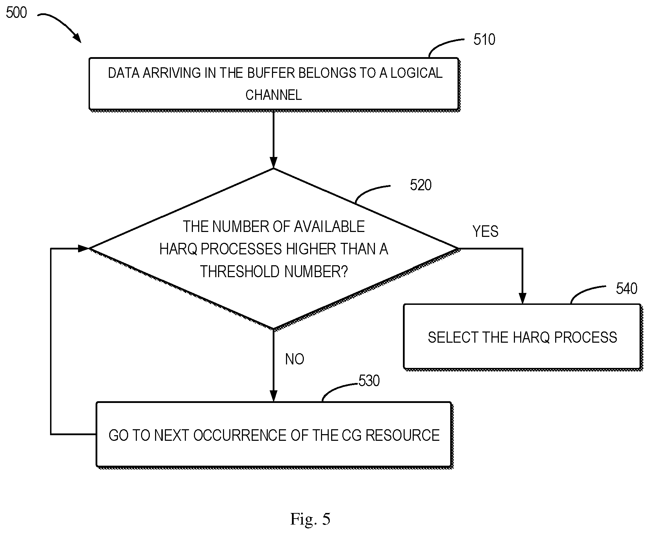

Fig. 5 illustrates a flow chart of the method 500 for selecting the HARQ process according to an embodiment of the present disclosure. In this situation, the CG#2 can select any one of the N HARQ processes under the condition that there are at least Y available HARQ processes. It should be noted that the numbers N, X and Y can be any suitable integer numbers.

At block 510, the terminal device 110-1 determines that the data needs to be transmitted on the CG#2 (channel #2). The data may arrive in the buffer of the terminal device 110-1. The data belongs to a logical channel which has a priority.

At block 520, the terminal device 110-1 determines whether the number of available HARQ processes is higher than a threshold number which can be represented as Y. The threshold number can be any suitable number. For example, if the number of available HARQ processes is less than Y, the terminal device 110-1 may go to next occurrence of the CG#2 at block 530. The threshold number can be determined by the network device and transmitted to the terminal device. The threshold number can also be predefined at the terminal device.

If the number of available HARQ processes is higher than Y, at block 540, the terminal device 110-1 selects the HARQ process from the available HARQ processes.

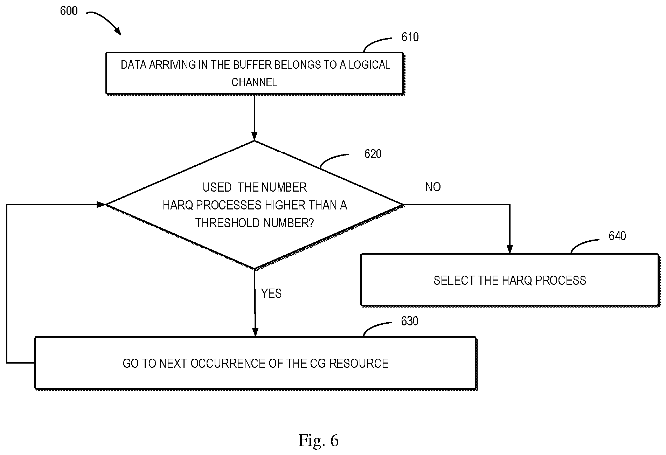

Fig. 6 illustrates a flow chart of the method 600 for selecting the HARQ process according to an embodiment of the present disclosure. In this example, the maximum number of HARQ processes which are simultaneously used by CG#2 may be Z. It should be noted that the number Z can be any suitable integer numbers.

At block 610, the terminal device 110-1 determines that the data needs to be transmitted on the CG#2 (channel #2). The data may arrive in the buffer of the terminal device 110-1. The data belongs to a logical channel which has a priority.

At block 620, the terminal device 110-1 determines whether the number of HARQ processes being used by the CG#2 is higher than a threshold number which can be represented as Z. The threshold number can be any suitable number. For example, if the number of HARQ processes being used by the CG#2 is higher than Z, the terminal device 110-1 may go to next occurrence of the CG#2 at block 630. The threshold number can be determined by the network device and transmitted to the terminal device. The threshold number can also be predefined at the terminal device.

If the number of HARQ processes being used by the CG#2 is less than Z, at block 630, the terminal device 110-1 selects the HARQ process from the available HARQ processes.

Referring back to Fig. 3, the terminal device 110-1 transmits the data to the network device 120 on the one of the plurality of configured grant resources. In this way, the data with high priority can be transmitted with low latency. Embodiments of the present disclosure increases throughput to allow a configured grant resource to use more processes than fixed a number for each. When there is no data for transmission for a configured grant resource, it does not consume any process. On the other hand, reserving a certain number of processes for a configured grant resource ensures low latency for high priority data.

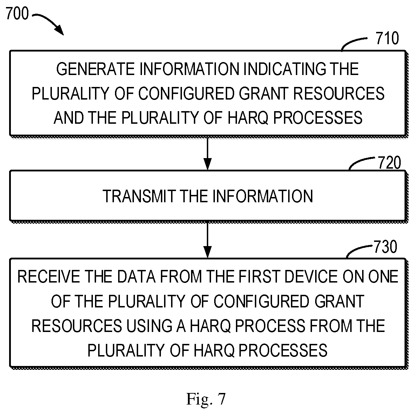

Fig. 7 illustrates a flow chart of a 700 in accordance with embodiments of the present disclosure. The method 700 may be implemented at any suitable devices. Only for the purpose of illustrations, the method 700 is described to be implemented at the network device 120. It should be noted that the method 700 may also be implemented at the terminal device 110-1.

At block 710, the network device 120 generates the information. The information indicates a plurality of configured grant resources and a plurality of HARQ processes. The plurality of configured grant resources shares the plurality of HARQ processes. The information may comprise identities of the plurality of configured grant resources and identities of the plurality of HARQ processes. In this way, sharing the plurality of HARQ processes increases throughput to allow a configured grant to use more processes than fixed a number for each. When there is no data for transmission for a configured grant, it does not consume any process. The configured grant resource may be periodic resources shared by terminal devices.

In some embodiments, the network device 120 may determine the configured grant resources and allocate them to the terminal device 110-1. The network device 120 may also determine the plurality of HARQ processes based on one or more conditions. For example, the conditions may comprise one or more of: quality of service, traffic volume, and a service type.

In an example embodiment, the network device 120 may generate a threshold number of available HARQ processes. The information may indicate the threshold number. If the number of available HARQ processes is below the threshold number, the data with high priority can be guaranteed and the data with low priority can be omitted. The network device 120 may generate the information indicating the priorities of the plurality of configured grant resources. The network device 120 may also generate a threshold priority for the data.

In some embodiments, the network device 120 may generate the information indicating a first set of HARQ processes from the plurality of HARQ processes. The first set of HARQ processes may be used for the transmission with priorities higher than a threshold priority. Alternatively or in addition, the network device 120 may generate the information indicating a second set of HARQ processes from the plurality of HARQ processes. Transmissions with priorities lower than a threshold priority may be only allowed to select from the second set of HARQ processes. In some embodiments, the network device 120 may also generate the threshold priority.

At block 720, the network device 120 transmits the information to the terminal device 110-1. In some embodiments, the information may explicitly indicate which of the HARQ processes can be used by one or more of the configured grant resources. Alternatively or in addition, the information may explicitly indicate which of the HARQ processes can be used by the channel/channel group with higher priority and/or which of the HARQ processes can be used by the channel/channel group with lower priority.

In some embodiments, the information may comprise criteria for the selection of the HARQ process from the information. For example, in order to increase the chances of having free HARQ processes for transmitting high priority services on the configured grant resource, the criteria may indicate that a subset of HARQ processes within the plurality of HARQ processes for CG can only be used for the transmission of high priority. Low priority transmissions may be limited to the HARQ processes outside that subset.

At block 730, the network device 120 receives the data from the terminal device 110-1 on one of the plurality of configured grant resources using a HARQ process. The HARQ process may be selected from the plurality of HARQ processes by the terminal device 110-1.

As mentioned above, Fig. 8 illustrates a schematic diagram of interactions 800 of selecting HARQ process based on the resource belong to which CG. The network device 120 transmits 8005 the information to the terminal device 110-1. Detailed description of the information has been given with the reference to Fig. 2 and 3, which are omitted here for clarity purpose. Only as an example, there may be two configured grant resources (for example, CG#1 and CG#2) configured for a bandwidth part of a serving cell.

The terminal device 110-1 determines 8010 the data to be transmitted on the CG#1. The information may indicate that the third set of HARQ process is used for the CG#1. Thus, the terminal device 110-1 select 8015 the HARQ process #a from the third set of HARQ process for the transmission on the CG#1. The terminal device 110-1 transmits 8020 the data on CG#1 with the HARQ process ID#a. In some embodiments, the network device 120 may transmit 8025 the retransmission uplink grant for the HARQ process ID#a to the terminal device 110-1. The terminal device 110-1 may retransmit 8030 the data on the CG#1 with the HARQ process ID #a. It should be noted that the information may indicate more than one HARQ process can be used for the CG #1.

The terminal device 110-1 determines 8035 that the further data need to be transmitted on the CG#2. The information may indicate that the fourth set of HARQ processes is used for the CG#2. Thus, the terminal device 110-1 select 8040 the HARQ process #b from the fourth set of HARQ processes for the transmission on the CG#2. The terminal device 110-1 transmits 8045 the data on CG#2 with the HARQ process ID#b. The fourth set of HARQ processes may be the subset of the third set of HARQ processes.

In some embodiments, an apparatus for performing the method 300 (for example, the terminal device 110-1) may comprise respective means for performing the corresponding steps in the method 300. These means may be implemented in any suitable manners. For example, it can be implemented by circuitry or software modules.

In some embodiments, the apparatus comprises means for receiving, at a first device and from a second device, information indicating a plurality of configured grant resources and a plurality of hybrid automatic repeat request, HARQ, processes, the plurality of HARQ processes shared by the plurality of configured grant resources; means for in response to a determination that data needs to be transmitted on one of the plurality of configured grant resources, selecting a HARQ process from the plurality of HARQ processes; and means for transmitting the data to the second device on the one of the plurality of configured grant resources using the selected HARQ process.

In some embodiments, the means for selecting the HARQ process from the plurality of HARQ processes comprises: means for extracting from the information criteria for selection of the HARQ processes; and means for selecting the HARQ process from the plurality of HARQ processes based on the criteria.

In some embodiments, the means for selecting the HARQ process from the plurality of HARQ processes comprises: means for determining, from the plurality of HARQ processes, a set of available HARQ processes; means for determining the number of available HARQ processes in the plurality of HARQ processes; means for in response to the number being below a threshold number, determining a priority of the one of plurality of the configured grant resources; and means for in response to the priority exceeding a threshold priority, selecting the HARQ process from the available HARQ processes.

In some embodiments, the means for selecting the HARQ process from the plurality of HARQ processes comprises: means for determining a first set of HARQ processes from the plurality of HARQ processes based on the information, the first set of HARQ processes used for data with priorities higher than a threshold priority; means for determining a priority of the data; and means for in response to the priority exceeding the threshold priority, selecting the HARQ process from the first set of HARQ processes.

In some embodiments, the means for selecting the HARQ process from the plurality of HARQ processes comprises: means for determining a second set of HARQ processes from the plurality of HARQ processes based on the information, data with priorities lower than a threshold priority being only allowed to using the second set of HARQ processes; means for determining a priority of the data; and means for in response to the priority being below the threshold priority, selecting the HARQ process from the second set of HARQ processes.

In some embodiments, the means for determining the priority of the data comprises: means for determining the priority of the data based on at least one of: a priority of a logical channel/logical channel group to which the data belongs, a buffered time of the data, or a priority of a traffic to which medium access control (MAC) control element (CE) contained in the data relates.

In some embodiments, the apparatus comprises means for determining a third set of HARQ processes from the plurality of HARQ processes based on the information, the third set of HARQ processes being used for the one of the plurality of configured grant resources; and means for selecting the HARQ from the third set of HARQ processes.

In some embodiments, the apparatus comprises means for determining a fourth set of HARQ processes from the plurality of HARQ processes based on the information, the third set of HARQ processes being used for the further one of the plurality of configured grant resources, the fourth set of HARQ processes being a subset of the third set of HARQ processes.

In some embodiments, the means for selecting the HARQ process from the plurality of HARQ processes comprises: means for determining a logical channel to which the data belongs; means for determining the number of HARQ processes currently used by the channel; and means for in response to the number being below a threshold number, selecting the HARQ process from the plurality of HARQ processes.

In some embodiments, the means for selecting the HARQ process from the plurality of HARQ processes comprises: means for determining, from the plurality of HARQ processes, a set of available HARQ processes based on timers of the plurality of HARQ processes; and means for selecting the HARQ process from the set of available HARQ processes.

In some embodiments, the first device comprises a terminal device and the second device comprises a network device.

In some embodiments, an apparatus for performing the method 700 (for example, the network device 120) may comprise respective means for performing the corresponding steps in the method 700. These means may be implemented in any suitable manners. For example, it can be implemented by circuitry or software modules.

In some embodiments, the apparatus comprises means for generating, at a second device, information indicating a plurality of configured grant resources and a plurality of hybrid automatic repeat request, HARQ, processes, the plurality of HARQ processes shared by the plurality of configured grant resources; means for transmitting the information to a first device; and means for receiving data from the first device on one of the plurality of configured grant resources using a HARQ process from the plurality of HARQ processes.

In some embodiments, the means for generating the information comprises: means for generating criteria for selection of the HARQ process; and means for adding the criteria to the information.

In some embodiments, the means for generating the information comprises: means for generating the information indicating a threshold number of available HARQ processes in the plurality of HARQ processes.

In some embodiments, the means for generating the information comprises: means for generating the information indicating a first set of HARQ processes from the plurality of HARQ processes, the first set of HARQ processes used for data with priorities higher than a threshold priority.

In some embodiments, the means for generating the information comprises: means for generating the information indicating a second set of HARQ processes from the plurality of HARQ processes, data with priorities lower than a threshold priority being only allowed to use the second set of HARQ processes.

In some embodiments, the means for generating the information comprises: means for generating the information indicating a third set of HARQ processes from the plurality of HARQ processes, the third set of HARQ processes being used for one of the plurality of configured grant resources.

In some embodiments, the means for generating the information comprises: and means for generating the threshold priority.

In some embodiments, the first device comprises a terminal device and the second device comprises a network device.

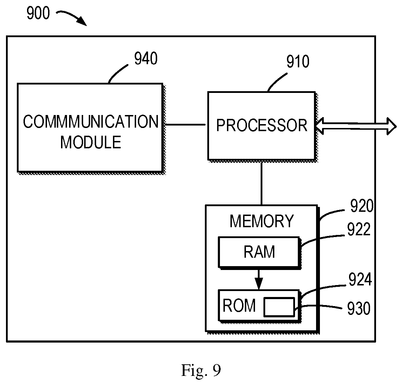

Fig. 9 is a simplified block diagram of a device 900 that is suitable for implementing embodiments of the present disclosure. The device 900 may be provided to implement the communication device, for example the network device 120 or the terminal devices 110 as shown in Fig. 1. As shown, the device 900 includes one or more processors 910, one or more memories 920 coupled to the processor 910, and one or more communication module (for example, transmitters and/or receivers (TX/RX)) 940 coupled to the processor 910.

The communication module 940 is for bidirectional communications. The communication module 940 has at least one antenna to facilitate communication. The communication interface may represent any interface that is necessary for communication with other network elements.

The processor 910 may be of any type suitable to the local technical network and may include one or more of the following: general purpose computers, special purpose computers, microprocessors, digital signal processors (DSPs) and processors based on multicore processor architecture, as non-limiting examples. The device 900 may have multiple processors, such as an application specific integrated circuit chip that is slaved in time to a clock which synchronizes the main processor.

The memory 920 may include one or more non-volatile memories and one or more volatile memories. Examples of the non-volatile memories include, but are not limited to, a Read Only Memory (ROM) 924, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 922 and other volatile memories that will not last in the power-down duration.

A computer program 930 includes computer executable instructions that are executed by the associated processor 910. The program 930 may be stored in the ROM 924. The processor 910 may perform any suitable actions and processing by loading the program 930 into the RAM 922.

The embodiments of the present disclosure may be implemented by means of the program 930 so that the device 900 may perform any process of the disclosure as discussed with reference to Figs. 2 to 7. The embodiments of the present disclosure may also be implemented by hardware or by a combination of software and hardware.

In some embodiments, the program 930 may be tangibly contained in a computer readable medium which may be included in the device 900 (such as in the memory 920) or other storage devices that are accessible by the device 900. The device 900 may load the program 930 from the computer readable medium to the RAM 922 for execution. The computer readable medium may include any types of tangible non-volatile storage, such as ROM, EPROM, a flash memory, a hard disk, CD, DVD, and the like. Fig. 9 shows an example of the computer readable medium 1000 in form of CD or DVD. The computer readable medium has the program 930 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the methods 400 and 900 as described above with reference to Figs. 2-5. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims. The invention is defined by the appended independent claims.

## Claims

1. A method comprising:
receiving (2010), at a terminal device (110-1) and from a network device (120), information indicating a plurality of configured grant resources and a plurality of hybrid automatic repeat request, HARQ, processes, the plurality of HARQ processes forming a common pool of HARQ processes which is shared by the plurality of configured grant resources, wherein the plurality of configured grant resources are configured in one bandwidth part;
determining, by the terminal device (110-1), from the plurality of HARQ processes, available HARQ processes for transmission and/or retransmission based at least on a timer of the respective HARQ process;
selecting (2020), by the terminal device (110-1), a HARQ process from the available HARQ processes; and
transmitting (2055), by the terminal device (110-1) to the network device (120), data on one of the plurality of configured grant resources using the selected HARQ process.

2. The method of claim 1, wherein the selecting the HARQ process from the plurality of HARQ processes comprises:
extracting from the information criteria for selection of the HARQ process; and
selecting the HARQ process from the plurality of HARQ processes based on the criteria.

3. The method of claim 1 or claim 2, wherein the selecting the HARQ process from the plurality of HARQ processes comprises:
determining (2025), from the plurality of HARQ processes, a set of available HARQ processes;
determining (2045) a priority of the data; and
selecting the HARQ process from the set of available HARQ processes based on the priority of the data.

4. The method of claim 3, wherein the priority of the data is determined based on at least one of:
a priority of a logical channel/logical channel group to which the data belongs,
a buffered time of the data, or
a priority of a traffic to which medium access control, MAC, control element, CE, contained in the data relates.

5. The method any one of claims 1 to 4,
wherein the data is a retransmitted data,
wherein the one of the plurality of configured grant resources is different from a configured grant resource of an initial data transmission, and
wherein the configured grant resource and the one of the plurality of configured grant resources have the same transmission block size.

6. A method comprising:
generating (710), at a network device (120), information indicating a plurality of configured grant resources and a plurality of hybrid automatic repeat request, HARQ, processes, the plurality of HARQ processes forming a common pool of HARQ processes which is shared by the plurality of configured grant resources, wherein the plurality of configured grant resources are configured in one bandwidth part;
transmitting (720), by the network device (120), the information to a terminal device (110-1); and
receiving (730), by the network device (120) from the terminal device (110-1), data on one of the plurality of configured grant resources using a HARQ process from the plurality of HARQ processes, wherein the HARQ process is selected by the terminal device (110-1) from available HARQ processes, wherein available HARQ processes for transmission and/or retransmission are determined, by the terminal device, from the plurality of HARQ processes, based at least on a timer of the respective HARQ process.

7. The method of claim 6, wherein the generating the information comprises:
generating criteria for selection of the HARQ process; and
adding the criteria to the information.

8. The method of claim 6 or claim 7, wherein the information further indicates at least one of:
a first set of HARQ processes from the plurality of HARQ processes, the first set of HARQ processes being used for data with priorities higher than a threshold priority;
a second set of HARQ processes from the plurality of HARQ processes, data with priorities lower than a threshold priority being only allowed to use the second set of HARQ processes;
a third set of HARQ processes from the plurality of HARQ processes, the third set of HARQ processes being used for one of the plurality of configured grant resources;
a threshold number of available HARQ processes in the plurality of HARQ processes; and
the threshold priority.

9. The method any one of claims 6 to 8,
wherein the data is a retransmitted data,
wherein the one of the plurality of configured grant resources is different from a configured grant resource of an initial data transmission, and
wherein the configured grant resource and the one of the plurality of configured grant resources have the same transmission block size.

10. A terminal device (110-1) comprising:
means (940) for receiving, from a network device (120), information indicating a plurality of configured grant resources and a plurality of hybrid automatic repeat request, HARQ, processes, the plurality of HARQ processes forming a common pool of HARQ processes which is shared by the plurality of configured grant resources, wherein the plurality of configured grant resources are configured in one bandwidth part;
means (910, 920) for determining, by the terminal device (110-1), from the plurality of HARQ processes, available HARQ processes for transmission and/or retransmission based at least on a timer of the respective HARQ process;
means (910, 920) for selecting a HARQ process from the available HARQ processes; and
means (940) for transmitting, to the network device (120), data on one of the plurality of configured grant resources using the HARQ process.

11. The terminal device (110-1) of claim 10, further comprising:
means (910, 920) for extracting from the information criteria for selection of the HARQ process; and
means (910, 920) for selecting the HARQ process from the plurality of HARQ processes based on the criteria.

12. The terminal device (110-1) of claim 10 or claim 11, further comprising:
means (910, 920) for determining, from the plurality of HARQ processes, a set of available HARQ processes;
means (910, 920) for determining a priority of the data; and
means (910, 920) for selecting the HARQ process from the set of available HARQ processes based on the priority of the data.

13. The terminal device (110-1) of any of the claims 10 to 12, wherein the priority of the data is determined based on at least one of:
a priority of a logical channel/logical channel group to which the data belongs,
a buffered time of the data, or
a priority of a traffic to which medium access control, MAC, control element, CE, contained in the data relates.

14. The terminal device (110-1) of any one of claims 10 to 13,
wherein the data is a retransmitted data,
wherein the one of the plurality of configured grant resources is different from a configured grant resource of an initial data transmission, and
wherein the configured grant resource and the one of the plurality of configured grant resources have the same transmission block size.

15. The terminal device (110-1) of any of claims 10 to 14, wherein the HARQ process is selected when the data needs to be transmitted on one of the plurality of configured grant resources.

16. A network device (120) comprising:
means (910, 920) for generating information indicating a plurality of configured grant resources and a plurality of hybrid automatic repeat request, HARQ, processes, the plurality of HARQ processes forming a common pool of HARQ processes which is shared by the plurality of configured grant resources, wherein the plurality of configured grant resources are configured in one bandwidth part;
means (940) for transmitting the information to a terminal device (110-1); and
means (940) for receiving, by the network device (120) from the terminal device (110-1), data on one of the plurality of configured grant resources using a HARQ process from the plurality of HARQ processes, wherein the HARQ process is selected by the terminal device (110-1) from available HARQ processes, wherein available HARQ processes for transmission and/or retransmission are determined, by the terminal device, from the plurality of HARQ processes, based at least on a timer of the respective HARQ process .

17. The network device (120) of claim 16, wherein the information indicates at least one of:
a first set of HARQ processes from the plurality of HARQ processes, the first set of HARQ processes being used for data with priorities higher than a threshold priority;
a second set of HARQ processes from the plurality of HARQ processes, data with priorities lower than a threshold priority being only allowed to use the second set of HARQ processes;
a third set of HARQ processes from the plurality of HARQ processes, the third set of HARQ processes being used for one of the plurality of configured grant resources;
a threshold number of available HARQ processes in the plurality of HARQ processes; and
the threshold priority.

18. The network device (120) of claim 16 or 17,
wherein the data is a retransmitted data,
wherein the one of the plurality of configured grant resources is different from a configured grant resource of an initial data transmission, and
wherein the configured grant resource and the one of the plurality of configured grant resources have the same transmission block size.

19. A computer readable medium storing instructions thereon, the instructions, when executed by at least one processing unit of a terminal device (110-1), causing the terminal device (110-1) to perform:
receiving, from a network device (120), information indicating a plurality of configured grant resources and a plurality of hybrid automatic repeat request, HARQ, processes, the plurality of HARQ processes forming a common pool of HARQ processes which is shared by the plurality of configured grant resources, wherein the plurality of configured grant resources are configured in one bandwidth part;
determining, by the terminal device (110-1), from the plurality of HARQ processes, available HARQ processes for transmission and/or retransmission based at least on a timer of the respective HARQ process;
selecting a HARQ process from the available HARQ processes; and
transmitting, to the network device (120), data on the one of the plurality of configured grant resources using the selected HARQ process.

20. A computer readable medium storing instructions thereon, the instructions, when executed by at least one processing unit of a network device (120), causing the network device (120) to perform:
generating information indicating a plurality of configured grant resources and a plurality of hybrid automatic repeat request, HARQ, processes, the plurality of HARQ processes forming a common pool of HARQ processes which is shared by the plurality of configured grant resources, wherein the plurality of configured grant resources are configured in one bandwidth part;
transmitting the information to a terminal device (110-1); and
receiving, by the network device from the terminal device (110-1), data on one of the plurality of configured grant resources using a HARQ process from the plurality of HARQ processes, wherein the HARQ process is selected by the terminal device (110-1) from available HARQ processes, wherein available HARQ processes for transmission and/or retransmission are determined, by the terminal device, from the plurality of HARQ processes, based at least on a timer of the respective HARQ process.

## Patentansprüche

1. Verfahren, das Folgendes umfasst:
Empfangen (2010) von Informationen, die eine Vielzahl von Configured Grant-Ressourcen und eine Vielzahl von hybriden automatischen Wiederholungsanforderungs(HARQ)-Prozessen anzeigen, an einer Endgerätevorrichtung (110-1) und von einer Netzwerkvorrichtung (120), wobei die Vielzahl von HARQ-Prozessen einen gemeinsamen Pool von HARQ-Prozessen bildet, der von der Vielzahl von Configured Grant-Ressourcen gemeinsam verwendet wird, wobei die Vielzahl von Configured Grant-Ressourcen in einem Bandbreitenteil ausgelegt sind;
Bestimmen von verfügbaren HARQ-Prozessen für eine Übertragung und/oder Neuübertragung durch die Endgerätevorrichtung (110-1) mindestens auf Basis eines Timers des jeweiligen HARQ-Prozesses von der Vielzahl von HARQ-Prozessen;
Auswählen (2020) eines HARQ-Prozesses aus den verfügbaren HARQ-Prozessen durch die Endgerätevorrichtung (110-1); und
Übertragen (2055) von Daten auf einer der Vielzahl von Configured Grant-Ressourcen durch die Endgerätevorrichtung (110-1) unter Verwendung des ausgewählten HARQ-Prozesses zur Netzwerkvorrichtung (120).

2. Verfahren nach Anspruch 1, wobei das Auswählen des HARQ-Prozesses aus der Vielzahl von HARQ-Prozessen Folgendes umfasst:
Extrahieren von Kriterien für eine Auswahl des HARQ-Prozesses aus den Informationen; und
Auswählen des HARQ-Prozesses aus der Vielzahl von HARQ-Prozessen auf Basis der Kriterien.

3. Verfahren nach Anspruch 1 oder Anspruch 2, wobei das Auswählen des HARQ-Prozesses aus der Vielzahl von HARQ-Prozessen Folgendes umfasst:
Bestimmen (2025) eines Satzes von verfügbaren HARQ-Prozessen aus der Vielzahl von HARQ-Prozessen;
Bestimmen (2045) einer Priorität der Daten; und
Auswählen des HARQ-Prozesses aus dem Satz von verfügbaren HARQ-Prozessen auf Basis der Priorität der Daten.

4. Verfahren nach Anspruch 3, wobei die Priorität der Daten auf Basis von mindestens einem von Folgendem bestimmt wird:
einer Priorität eines logischen Kanals bzw. einer logischen Kanalgruppe, zu dem bzw. der die Daten gehören,
einer gepufferten Zeit der Daten, oder
einer Priorität eines Verkehrs, auf den sich ein Medienzugangssteuerungs(MAC)-Steuerelement, CE, bezieht, das in den Daten enthalten ist.

5. Verfahren nach einem der Ansprüche 1 bis 4,
wobei die Daten neu übertragene Daten sind,
wobei sich die eine der Vielzahl von Configured Grant-Ressourcen von einer Configured Grant-Ressource einer anfänglichen Datenübertragung unterscheidet, und
wobei die Configured Grant-Ressource und die eine der Vielzahl von Configured Grant-Ressourcen dieselbe Übertragungsblockgröße aufweisen.

6. Verfahren, das Folgendes umfasst:
Erzeugen (710) von Informationen, die eine Vielzahl von Configured Grant-Ressourcen und eine Vielzahl von hybriden automatischen Wiederholungsanforderungs(HARQ)-Prozessen anzeigen, an einer Netzwerkvorrichtung (120), wobei die Vielzahl von HARQ-Prozessen einen gemeinsamen Pool von HARQ-Prozessen bildet, der von der Vielzahl von Configured Grant-Ressourcen gemeinsam verwendet wird, wobei die Vielzahl von Configured Grant-Ressourcen in einem Bandbreitenteil ausgelegt sind;
Übertragen (720) der Informationen durch die Netzwerkvorrichtung (120) zu einer Endgerätevorrichtung (110-1); und
Empfangen (730) von Daten auf einer der Vielzahl von Configured Grant-Ressourcen durch die Netzwerkvorrichtung (120) unter Verwendung eines HARQ-Prozesses aus der Vielzahl von HARQ-Prozessen von der Endgerätevorrichtung (110-1), wobei der HARQ-Prozess von der Endgerätevorrichtung (110-1) aus verfügbaren HARQ-Prozessen ausgewählt wird, wobei verfügbare HARQ-Prozesse für eine Übertragung und/oder eine Neuübertragung von der Endgerätevorrichtung mindestens auf Basis eines Timers des jeweiligen HARQ-Prozesses aus der Vielzahl von HARQ-Prozessen bestimmt wird.

7. Verfahren nach Anspruch 6, wobei das Erzeugen der Informationen Folgendes umfasst:
Erzeugen von Kriterien für eine Auswahl des HARQ-Prozesses; und
Hinzufügen der Kriterien zu den Informationen.

8. Verfahren nach Anspruch 6 oder Anspruch 7, wobei die Informationen mindestens eines von Folgendem anzeigen:
einem ersten Satz von HARQ-Prozessen aus der Vielzahl von HARQ-Prozessen, wobei der erste Satz von HARQ-Prozessen für Daten mit einer Priorität verwendet wird, die höher ist als eine Schwellwertpriorität;
einem zweiten Satz von HARQ-Prozessen aus der Vielzahl von HARQ-Prozessen, wobei es Daten mit einer Priorität, die niedriger ist als eine Schwellwertpriorität, nur erlaubt ist, den zweiten Satz von HARQ-Prozessen zu verwenden;
einem dritten Satz von HARQ-Prozessen aus der Vielzahl von HARQ-Prozessen, wobei der dritte Satz von HARQ-Prozessen für eine der Vielzahl von Configured Grant-Ressourcen verwendet wird;
einer Schwellwertanzahl von verfügbaren HARQ-Prozessen in der Vielzahl von HARQ-Prozessen; und
einer Schwellwertpriorität.

9. Verfahren einem der Ansprüche 6 bis 8,
wobei die Daten neu übertragene Daten sind,
wobei sich die eine der Vielzahl von Configured Grant-Ressourcen von einer Configured Grant-Ressource einer anfänglichen Datenübertragung unterscheidet, und
wobei die Configured Grant-Ressource und die eine der Vielzahl von Configured Grant-Ressourcen dieselbe Übertragungsblockgröße aufweisen.

10. Endgerätevorrichtung (110-1), die Folgendes umfasst:
Mittel (940) zum Empfangen von Informationen, die eine Vielzahl von Configured Grant-Ressourcen und eine Vielzahl von hybriden automatischen Wiederholungsanforderungs(HARQ)-Prozessen anzeigen, von einer Netzwerkvorrichtung (120), wobei die Vielzahl von HARQ-Prozessen einen gemeinsamen Pool von HARQ-Prozessen bildet, der von der Vielzahl von Configured Grant-Ressourcen gemeinsam verwendet wird, wobei die Vielzahl von Configured Grant-Ressourcen in einem Bandbreitenteil ausgelegt sind;
Mittel (910, 920) zum Bestimmen von verfügbaren HARQ-Prozessen für eine Übertragung und/oder Neuübertragung durch die Endgerätevorrichtung (110-1) mindestens auf Basis eines Timers des jeweiligen HARQ-Prozesses von der Vielzahl von HARQ-Prozessen;
Mittel (910, 920) zum Auswählen eines HARQ-Prozesses aus den verfügbaren HARQ-Prozessen; und
Mittel (940) zum Übertragen von Daten auf einer der Vielzahl von Configured Grant-Ressourcen unter Verwendung des HARQ-Prozesses zur Netzwerkvorrichtung (120).

11. Endgerätevorrichtung (110-1) nach Anspruch 10, die ferner Folgendes umfasst:
Mittel (910, 920) zum Extrahieren von Kriterien für eine Auswahl des HARQ-Prozesses aus den Informationen; und
Mittel (910, 920) zum Auswählen des HARQ-Prozesses aus der Vielzahl von HARQ-Prozessen auf Basis der Kriterien.

12. Endgerätevorrichtung (110-1) nach Anspruch 10 oder Anspruch 11, die ferner Folgendes umfasst:
Mittel (910, 920) zum Bestimmen eines Satzes von verfügbaren HARQ-Prozessen aus der Vielzahl von HARQ-Prozessen;
Mittel (910, 920) zum Bestimmen einer Priorität der Daten; und
Mittel (910, 920) zum Auswählen des HARQ-Prozesses aus dem Satz von verfügbaren HARQ-Prozessen auf Basis der Priorität der Daten.

13. Endgerätevorrichtung (110-1) nach einem der Ansprüche 10 bis 12, wobei die Prioritäten der Daten auf Basis von mindestens einem von Folgendem bestimmt wird:
einer Priorität eines logischen Kanals bzw. einer logischen Kanalgruppe, zu dem bzw. der die Daten gehören,
einer gepufferten Zeit der Daten, oder
einer Priorität eines Verkehrs, auf den sich ein Medienzugangssteuerungs(MAC)-Steuerelement, CE, bezieht, das in den Daten enthalten ist.

14. Endgerätevorrichtung (110-1) nach einem der Ansprüche 10 bis 13,
wobei die Daten neu übertragene Daten sind,
wobei sich die eine der Vielzahl von Configured Grant-Ressourcen von einer Configured Grant-Ressource einer anfänglichen Datenübertragung unterscheidet, und
wobei die Configured Grant-Ressource und die eine der Vielzahl von Configured Grant-Ressourcen dieselbe Übertragungsblockgröße aufweisen.

15. Endgerätevorrichtung (110-1) nach einem der Ansprüche 10 bis 14, wobei der HARQ-Prozess ausgewählt wird, wenn die Daten auf einer der Vielzahl von Configured Grant-Ressourcen übertragen werden müssen.

16. Netzwerkvorrichtung (120), die Folgendes umfasst:
Mittel (910, 920) zum Erzeugen von Informationen, die eine Vielzahl von Configured Grant-Ressourcen und eine Vielzahl von hybriden automatischen Wiederholungsanforderungs(HARQ)-Prozessen anzeigen, wobei die Vielzahl von HARQ-Prozessen einen gemeinsamen Pool von HARQ-Prozessen bildet, der von der Vielzahl von Configured Grant-Ressourcen gemeinsam verwendet wird, wobei die Vielzahl von Configured Grant-Ressourcen in einem Bandbreitenteil ausgelegt sind;
Mittel (940) zum Übertragen der Informationen zu einer Endgerätevorrichtung (110-1); und
Mittel (940) zum Empfangen von Daten auf einer der Vielzahl von Configured Grant-Ressourcen durch die Netzwerkvorrichtung (120) unter Verwendung eines HARQ-Prozesses aus der Vielzahl von HARQ-Prozessen von der Endgerätevorrichtung (110-1), wobei der HARQ-Prozess von der Endgerätevorrichtung (110-1) aus verfügbaren HARQ-Prozessen ausgewählt wird, wobei verfügbare HARQ-Prozesse für eine Übertragung und/oder eine Neuübertragung von der Endgerätevorrichtung mindestens auf Basis eines Timers des jeweiligen HARQ-Prozesses aus der Vielzahl von HARQ-Prozessen bestimmt wird.

17. Netzwerkvorrichtung (120) nach Anspruch 16, wobei die Informationen mindestens eines von Folgendem anzeigen:
einem ersten Satz von HARQ-Prozessen aus der Vielzahl von HARQ-Prozessen, wobei der erste Satz von HARQ-Prozessen für Daten mit einer Priorität verwendet wird, die höher ist als eine Schwellwertpriorität;
einem zweiten Satz von HARQ-Prozessen aus der Vielzahl von HARQ-Prozessen, wobei es Daten mit einer Priorität, die niedriger ist als eine Schwellwertpriorität, nur erlaubt ist, den zweiten Satz von HARQ-Prozessen zu verwenden;
einem dritten Satz von HARQ-Prozessen aus der Vielzahl von HARQ-Prozessen, wobei der dritte Satz von HARQ-Prozessen für eine der Vielzahl von Configured Grant-Ressourcen verwendet wird;
einer Schwellwertanzahl von verfügbaren HARQ-Prozessen in der Vielzahl von HARQ-Prozessen; und
einer Schwellwertpriorität.

18. Netzwerkvorrichtung (120) nach Anspruch 16 oder 17,
wobei die Daten neu übertragene Daten sind,
wobei sich die eine der Vielzahl von Configured Grant-Ressourcen von einer Configured Grant-Ressource einer anfänglichen Datenübertragung unterscheidet, und
wobei die Configured Grant-Ressource und die eine der Vielzahl von Configured Grant-Ressourcen dieselbe Übertragungsblockgröße aufweisen.

19. Computerlesbares Medium, auf dem Anweisungen gespeichert sind, wobei die Anweisungen, wenn sie von mindestens einer Verarbeitungseinheit einer Endgerätevorrichtung (110-1) ausgeführt werden, die Endgerätevorrichtung (110-1) veranlassen, Folgendes durchzuführen:
Empfangen von Informationen, die eine Vielzahl von Configured Grant-Ressourcen und eine Vielzahl von hybriden automatischen Wiederholungsanforderungs(HARQ)-Prozessen anzeigen, von einer Netzwerkvorrichtung (120), wobei die Vielzahl von HARQ-Prozessen einen gemeinsamen Pool von HARQ-Prozessen bildet, der von der Vielzahl von Configured Grant-Ressourcen gemeinsam verwendet wird, wobei die Vielzahl von Configured Grant-Ressourcen in einem Bandbreitenteil ausgelegt sind;
Bestimmen von verfügbaren HARQ-Prozessen für eine Übertragung und/oder Neuübertragung durch die Endgerätevorrichtung (110-1) mindestens auf Basis eines Timers des jeweiligen HARQ-Prozesses von der Vielzahl von HARQ-Prozessen;
Auswählen eines HARQ-Prozesses aus den verfügbaren HARQ-Prozessen; und
Übertragen von Daten auf einer der Vielzahl von Configured Grant-Ressourcen unter Verwendung des ausgewählten HARQ-Prozesses zur Netzwerkvorrichtung (120).

20. Computerlesbares Medium, auf dem Anweisungen gespeichert sind, wobei die Anweisungen, wenn sie von mindestens einer Verarbeitungseinheit einer Netzwerkvorrichtung (120) ausgeführt werden, die Netzwerkvorrichtung (120) veranlassen, Folgendes durchzuführen:
Erzeugen von Informationen, die eine Vielzahl von Configured Grant-Ressourcen und eine Vielzahl von hybriden automatischen Wiederholungsanforderungs(HARQ)-Prozessen anzeigen, wobei die Vielzahl von HARQ-Prozessen einen gemeinsamen Pool von HARQ-Prozessen bildet, der von der Vielzahl von Configured Grant-Ressourcen gemeinsam verwendet wird, wobei die Vielzahl von Configured Grant-Ressourcen in einem Bandbreitenteil ausgelegt sind;
Übertragen der Informationen zu einer Endgerätevorrichtung (110-1); und
Empfangen von Daten auf einer der Vielzahl von Configured Grant-Ressourcen durch die Netzwerkvorrichtung unter Verwendung eines HARQ-Prozesses aus der Vielzahl von HARQ-Prozessen von der Endgerätevorrichtung (110-1), wobei der HARQ-Prozess von der Endgerätevorrichtung (110-1) aus verfügbaren HARQ-Prozessen ausgewählt wird, wobei verfügbare HARQ-Prozesse für eine Übertragung und/oder eine Neuübertragung von der Endgerätevorrichtung mindestens auf Basis eines Timers des jeweiligen HARQ-Prozesses aus der Vielzahl von HARQ-Prozessen bestimmt wird.

## Revendications

1. Procédé comprenant les étapes suivantes :
recevoir (2010) d'un dispositif de réseau (120), au niveau d'un dispositif terminal (110-1), des informations indiquant une pluralité de ressources d'octroi configurées et une pluralité de processus de demande de répétition automatique hybride, HARQ, la pluralité de processus HARQ formant une réserve commune de processus HARQ qui est partagée par la pluralité de ressources d'octroi configurées, dans lequel la pluralité de ressources d'octroi configurées est configurée dans une partie de bande passante ;
déterminer, par le dispositif terminal (110-1), à partir de la pluralité de processus HARQ, des processus HARQ disponibles pour la transmission et/ou la retransmission en se basant au moins sur un temporisateur du processus HARQ respectif ;
sélectionner (2020), par le dispositif terminal (110-1), un processus HARQ dans les processus HARQ disponibles ; et
transmettre (2055) au dispositif de réseau (120) par le dispositif terminal (110-1) des données d'une ressource d'octroi configurée de la pluralité de ressources d'octroi configurées à l'aide du processus HARQ sélectionné.

2. Procédé selon la revendication 1, dans lequel la sélection du processus HARQ dans la pluralité de processus HARQ comprend ce qui suit :
extraire à partir des informations des critères pour la sélection du processus HARQ ; et
sélectionner le processus HARQ dans la pluralité de processus HARQ sur la base des critères.

3. Procédé selon la revendication 1 ou 2, dans lequel la sélection du processus HARQ dans la pluralité de processus HARQ comprend ce qui suit :
déterminer (2025), à partir de la pluralité de processus HARQ, un ensemble de processus HARQ disponibles ;
déterminer (2045) une priorité des données ; et
sélectionner le processus HARQ dans l'ensemble de processus HARQ disponibles sur la base de la priorité des données.

4. Procédé selon la revendication 3, dans lequel la priorité des données est déterminée sur la base d'au moins un parmi :
une priorité d'un canal logique/groupe de canaux logiques auquel les données appartiennent,
un temps mis en mémoire tampon des données, ou
une priorité d'un trafic auquel se rapporte un élément de contrôle, CE, de contrôle d'accès au support, MAC, contenu dans les données.

5. Procédé selon l'une des revendications 1 à 4,
dans lequel les données sont des données retransmises,
dans lequel ladite une ressource d'octroi configurée de la pluralité de ressources d'octroi configurées est différente d'une ressource d'octroi configurée d'une transmission de données initiale, et
dans lequel la ressource d'octroi configurée et ladite une ressource d'octroi configurée de la pluralité de ressources d'octroi configurées ont la même taille de bloc de transmission.

6. Procédé comprenant les étapes suivantes :
générer (710), au niveau d'un dispositif de réseau (120), des informations indiquant une pluralité de ressources d'octroi configurées et une pluralité de processus de demande de répétition automatique hybride, HARQ, la pluralité de processus HARQ formant une réserve commune de processus HARQ qui est partagée par la pluralité de ressources d'octroi configurées, dans lequel la pluralité de ressources d'octroi configurées est configurée dans une partie de bande passante ;
transmettre (720), par le dispositif de réseau (120), des informations à un dispositif terminal (110-1) ; et
recevoir (730) du dispositif terminal (110-1), par le dispositif de réseau (120), des données d'une ressource d'octroi configurée de la pluralité de ressources d'octroi configurées à l'aide d'un processus HARQ de la pluralité de processus HARQ, dans lequel le processus HARQ est sélectionné par le dispositif terminal (110-1) dans des processus HARQ disponibles, dans lequel des processus HARQ disponibles pour la transmission et/ou la retransmission sont déterminés, par le dispositif terminal, à partir de la pluralité de processus HARQ, en se basant au moins sur un temporisateur du processus HARQ respectif.

7. Procédé selon la revendication 6, dans lequel la génération des informations comprend ce qui suit :
générer des critères pour la sélection du processus HARQ ; et
ajouter les critères aux informations.

8. Procédé selon la revendication 6 ou 7, dans lequel les informations indiquent en outre au moins un parmi :
un premier ensemble de processus HARQ de la pluralité de processus HARQ, le premier ensemble de processus HARQ étant utilisé pour des données dont les priorités sont supérieures à une priorité seuil ;
un deuxième ensemble de processus HARQ de la pluralité de processus HARQ, les données dont les priorités sont inférieures à une priorité seuil étant uniquement autorisées à utiliser le deuxième ensemble de processus HARQ ;
un troisième ensemble de processus HARQ de la pluralité de processus HARQ, le troisième ensemble de processus HARQ étant utilisé pour une ressource d'octroi configurée de la pluralité de ressources d'octroi configurées ;
un nombre seuil de processus HARQ disponibles DE la pluralité de processus HARQ ; et
le seuil de priorité.

9. Procédé selon l'une des revendications 6 à 8,
dans lequel les données sont des données retransmises,
dans lequel ladite une ressource d'octroi configurée de la pluralité de ressources d'octroi configurées est différente d'une ressource d'octroi configurée d'une transmission de données initiale, et
dans lequel la ressource d'octroi configurée et ladite une ressource d'octroi configurée de la pluralité de ressources d'octroi configurées ont la même taille de bloc de transmission.

10. Dispositif terminal (110-1) comprenant :
des moyens (940) pour recevoir d'un dispositif de réseau (120) des informations indiquant une pluralité de ressources d'octroi configurées et une pluralité de processus de demande de répétition automatique hybride, HARQ, la pluralité de processus HARQ formant une réserve commune de processus HARQ qui est partagée par la pluralité de ressources d'octroi configurées, dans lequel la pluralité de ressources d'octroi configurées est configurée dans une partie de bande passante ;
des moyens (910, 920) pour déterminer, par le dispositif terminal (110-1), à partir de la pluralité de processus HARQ, des processus HARQ disponibles pour la transmission et/ou la retransmission en se basant au moins sur un temporisateur du processus HARQ respectif ;
des moyens (910, 920) pour sélectionner un processus HARQ dans les processus HARQ disponibles ; et
des moyens (940) pour transmettre au dispositif de réseau (120) des données d'une ressource d'octroi configurée de la pluralité de ressources d'octroi configurées à l'aide du processus HARQ.

11. Dispositif terminal (110-1) selon la revendication 10, comprenant en outre :
des moyens (910, 920) pour extraire à partir des informations des critères pour la sélection du processus HARQ ; et
des moyens (910, 920) pour sélectionner le processus HARQ dans la pluralité de processus HARQ sur la base des critères.

12. Dispositif terminal (110-1) selon la revendication 10 ou 11, comprenant en outre :
des moyens (910, 920) pour déterminer, à partir de la pluralité de processus HARQ, un ensemble de processus HARQ disponibles ;
des moyens (910, 920) pour déterminer une priorité des données ; et
des moyens (910, 920) pour sélectionner le processus HARQ dans l'ensemble de processus HARQ disponibles sur la base de la priorité des données.

13. Dispositif terminal (110-1) selon l'une des revendications 10 à 12, dans lequel la priorité des données est déterminée sur la base d'au moins un parmi :
une priorité d'un canal logique/groupe de canaux logiques auquel les données appartiennent,
un temps mis en mémoire tampon des données, ou
une priorité d'un trafic auquel se rapporte un élément de contrôle, CE, de contrôle d'accès au support, MAC, contenu dans les données.

14. Dispositif terminal (110-1) selon l'une des revendications 10 à 13,
dans lequel les données sont des données retransmises,
dans lequel ladite une ressource d'octroi configurée de la pluralité de ressources d'octroi configurées est différente d'une ressource d'octroi configurée d'une transmission de données initiale, et
dans lequel la ressource d'octroi configurée et ladite une ressource d'octroi configurée de la pluralité de ressources d'octroi configurées ont la même taille de bloc de transmission.

15. Dispositif terminal (110-1) selon l'une des revendications 10 à 14, dans lequel le processus HARQ est sélectionné lorsque les données doivent être transmises sur une ressource d'octroi configurée de la pluralité de ressources d'octroi configurées.

16. Dispositif de réseau (120) comprenant :
des moyens (910, 920) pour générer des informations indiquant une pluralité de ressources d'octroi configurées et une pluralité de processus de demande de répétition automatique hybride, HARQ, la pluralité de processus HARQ formant une réserve commune de processus HARQ qui est partagée par la pluralité de ressources d'octroi configurées, dans lequel la pluralité de ressources d'octroi configurées est configurée dans une partie de bande passante ;
des moyens (940) pour transmettre des informations à un dispositif terminal (110-1) ; et
des moyens (940) pour recevoir du dispositif terminal (110-1), par le dispositif de réseau (120), des données d'une ressource d'octroi configurée de la pluralité de ressources d'octroi configurées à l'aide d'un processus HARQ de la pluralité de processus HARQ, dans lequel le processus HARQ est sélectionné par le dispositif terminal (110-1) dans des processus HARQ disponibles, dans lequel des processus HARQ disponibles pour la transmission et/ou la retransmission sont déterminés, par le dispositif terminal, à partir de la pluralité de processus HARQ, en se basant au moins sur un temporisateur du processus HARQ respectif.

17. Dispositif de réseau (120) selon la revendication 16, dans lequel les informations indiquent au moins un parmi :
un premier ensemble de processus HARQ de la pluralité de processus HARQ, le premier ensemble de processus HARQ étant utilisé pour des données dont les priorités sont supérieures à une priorité seuil ;
un deuxième ensemble de processus HARQ de la pluralité de processus HARQ, les données dont les priorités sont inférieures à une priorité seuil étant uniquement autorisées à utiliser le deuxième ensemble de processus HARQ ;
un troisième ensemble de processus HARQ de la pluralité de processus HARQ, le troisième ensemble de processus HARQ étant utilisé pour une ressource d'octroi configurée de la pluralité de ressources d'octroi configurées ;
un nombre seuil de processus HARQ disponibles DE la pluralité de processus HARQ ; et
le seuil de priorité.

18. Dispositif de réseau (120) selon la revendication 16 ou 17,
dans lequel les données sont des données retransmises,
dans lequel ladite une ressource d'octroi configurée de la pluralité de ressources d'octroi configurées est différente d'une ressource d'octroi configurée d'une transmission de données initiale, et
dans lequel la ressource d'octroi configurée et ladite une ressource d'octroi configurée de la pluralité de ressources d'octroi configurées ont la même taille de bloc de transmission.

19. Support lisible par ordinateur sur lequel sont stockées des instructions, les instructions, lorsqu'elles sont exécutées par au moins une unité de traitement d'un dispositif terminal (110-1), amenant le dispositif terminal (110-1) à effectuer ce qui suit :
recevoir d'un dispositif de réseau (120) des informations indiquant une pluralité de ressources d'octroi configurées et une pluralité de processus de demande de répétition automatique hybride, HARQ, la pluralité de processus HARQ formant une réserve commune de processus HARQ qui est partagée par la pluralité de ressources d'octroi configurées, dans lequel la pluralité de ressources d'octroi configurées est configurée dans une partie de bande passante ;
déterminer, par le dispositif terminal (110-1), à partir de la pluralité de processus HARQ, des processus HARQ disponibles pour la transmission et/ou la retransmission en se basant au moins sur un temporisateur du processus HARQ respectif ;
sélectionner un processus HARQ dans les processus HARQ disponibles ; et
transmettre au dispositif de réseau (120) des données sur ladite une ressource d'octroi configurée de la pluralité de ressources d'octroi configurées à l'aide du processus HARQ sélectionné.

20. Support lisible par ordinateur sur lequel sont stockées des instructions, les instructions, lorsqu'elles sont exécutées par au moins une unité de traitement d'un dispositif de réseau (120), amenant le dispositif de réseau (120) à effectuer ce qui :
générer des informations indiquant une pluralité de ressources d'octroi configurées et une pluralité de processus de demande de répétition automatique hybride, HARQ, la pluralité de processus HARQ formant une réserve commune de processus HARQ qui est partagée par la pluralité de ressources d'octroi configurées, dans lequel la pluralité de ressources d'octroi configurées est configurée dans une partie de bande passante ;
transmettre des informations à un dispositif terminal (110-1) ; et
recevoir du dispositif terminal (110-1), par le dispositif de réseau, des données d'une ressource d'octroi configurée de la pluralité de ressources d'octroi configurées à l'aide d'un processus HARQ de la pluralité de processus HARQ, dans lequel le processus HARQ est sélectionné par le dispositif terminal (110-1) dans des processus HARQ disponibles, dans lequel des processus HARQ disponibles pour la transmission et/ou la retransmission sont déterminés, par le dispositif terminal, à partir de la pluralité de processus HARQ, en se basant au moins sur un temporisateur du processus HARQ respectif.
